Europäisches Patentamt

European Patent Office

Office européen des brevets

(19)

(11) Numéro de publication: **0 206 866**
**B1**

(12) **FASCICULE DE BREVET EUROPEEN**

(45) Date de publication du fascicule du brevet:
**08.03.89**

(51) Int. Cl.⁴: **G01C 19/64**

(21) Numéro de dépôt: **86401118.4**

(22) Date de dépôt: **27.05.86**

(54) **Dispositif interferometrique en anneau à fibre optique monomode.**

(30) Priorité: **30.05.85 FR 8508163**

(43) Date de publication de la demande:
**30.12.86 Bulletin 86/52**

(45) Mention de la délivrance du brevet:
**08.03.89 Bulletin 89/10**

(84) Etats contractants désignés:
**DE GB IT NL SE**

(56) Documents cités:
**FR-A- 2 409 518**

(73) Titulaire: **THOMSON-CSF, 173, Boulevard Haussmann,
F-75379 Paris Cédex 08(FR)**

(72) Inventeur: **Arditty, Hervé, Thomson-CSF SCPI 19, avenue
de Messine, F-75008 Paris(FR)**
Inventeur: **Lefevre, Hervé, Thomson-CSF
SCPI 19, avenue de Messine, F-75008 Paris(FR)**

(74) Mandataire: **Lepercque, Jean et al, THOMSON-CSF
SCPI 19, avenue de Messine, F-75008 Paris(FR)**

## Description

La présente invention concerne un dispositif interférométrique en anneau à fibre monomode.

Dans un interféromètre en anneau, ou interféromètre de Sagnac, deux faisceaux parcourent en sens opposés un même trajet optique et interfèrent à la sortie de ce trajet. Pour autant qu'une perturbation de ce trajet présente les mêmes caractéristiques pour les deux sens de propagation et ne varie pas pendant la durée du transit de la lumière dans l'interféromètre, les deux faisceaux sont affectés identiquement et leur phase relative demeure inchangée. Les perturbations de ce type sont dites "réciproques". Parce que le temps de transit dans un interféromètre est généralement très petit, les variations d'une perturbation pendant ce temps, sauf si celle-ci est introduite volontairement, sont généralement négligeables.

Mais il existe des perturbations "non réciproques" qui présentent une amplitude différente aux deux sens de propagation, il s'agit d'effets physiques qui, en établissant son orientation complète, détruisent la symétrie de l'espace ou du milieu.

Deux effets connus présentent cette propriété:
- l'effet Faraday, ou effet magnéto-optique colinéaire, par lequel où un champ magnétique crée une orientation préférentielle du spin des électrons du matériau optique;
- et l'effet Sagnac, par lequel effet inertiel relativiste, où la rotation de l'interféromètre par rapport à un repère galliléen détruit la symétrie des temps de propagation.

L'utilisation de la rotation par rapport à l'espace inertiel conduit à la réalisation de gyromètres à fibre optique et l'utilisation du champ magnétique conduit à la réalisation de capteurs de courant ampèremétriques ou de magnétomètres.

Il a été montré que l'utilisation d'une configuration particulière, dite réciproque, permet d'annuler exactement tout déphasage autre que ceux induits par les effets non réciproques.

Cette configuration nécessite cependant de détecter la lumière revenant par la porte d'entrée monomode de l'interféromètre. Ceci nécessite l'utilisation d'un séparateur qui permet de renvoyer une partie de la lumière sortante sur un détecteur tout en couplant de la lumière en entrée. Le signal retour sur le détecteur est optimum quand le séparateur est du type 50–50 mais cela provoque une perte systématique de 6 dB et ajoute un composant au système. Il a été proposé de remplacer ce séparateur par un commutateur rapide qui est placé dans un premier état de commutation lorsque la lumière est émise par la source et la transmet au système en entrée et qui est placé dans son autre état de commutation, quand la lumière revient, pour l'envoyer sur le détecteur. Les longueurs de fibre utilisées dans ces systèmes étant de l'ordre de 200 mètres à 2 kilomètres, les retards dûs à la propagation sont de l'ordre de 1 à 10 microsecondes.

Un tel dispositif est décrit dans le brevet français FR-B 2 409 518. Le bilan énergétique est amélioré, mais on peut encore simplifier l'architecture du dispositif.

C'est le but que se fixe l'invention. Pour ce faire, elle propose des dispositions permettant de supprimer le séparateur ou le commutateur rapide.

L'invention a donc pour objet un dispositif interféromètre en anneau comprenant une fibre optique monomode formant ledit anneau, des moyens d'émission-réception d'énergie lumineuse cohérente, des moyens de séparation et de mélange du rayonnement pour diriger simultanément et par parties égales, l'énergie lumineuse cohérente émise vers les deux extrémités de la fibre optique monomode pour recombiner le rayonnement émergeant des deux extrémités de la fibre optique monomode et un filtre de mode disposé entre les moyens de séparation et de mélange et les moyens d'émission-réception d'énergie lumineuse, caractérisé en ce que les moyens d'émission-réception d'énergie lumineuse sont constitués par une diode semiconductrice qui, polarisée dans le sens direct, émet de la lumière d'une longueur d'onde déterminée et qui, polarisée en sens inverse, est détectrice de lumière de même longueur d'onde; et en ce qu'il comprend des moyens de polarisation de ladite diode en sens direct pour en commander l'émission de lumière, des moyens de traitement de signaux électriques, des moyens de commutation et des moyens de commande de ces moyens de commutation, de manière à établir alternativement une liaison électrique entre la diode semiconductrice et, respectivement les moyens de polarisation en sens direct et les moyens de traitement de signaux électriques.

L'invention a encore pour objet un dispositif interféromètre en anneau comprenant une fibre optique monomode formant ledit anneau, des moyens d'émission-réception d'énergie lumineuse cohérente, des moyens de séparation et de mélange du rayonnement pour diriger simultanément et par parties égales l'énergie lumineuse cohérente émise vers les deux extrémités de la fibre optique monomode et pour recombiner le rayonnement émergeant des deux extrémités de la fibre optique monomode et un filtre de mode disposé entre les moyens de séparation et de mélange et les moyens d'émission-réception d'énergie lumineuse, caractérisé en ce que les moyens d'émission-réception d'énergie lumineuse comprennent une diode semiconductrice émettrice de lumière cohérente couplée optiquement par une première face au filtre de mode et des moyens optoélectroniques de détection couplés optiquement à une seconde face de la diode semiconductrice émettrice de lumière, cette diode amplifiant la lumière retransmise aux moyens d'émission-réception, avant détection.

L'invention sera mieux comprise et d'autres caractéristiques et avantages apparaîtront à l'aide de la description qui suit en référence aux figures annexées et parmi lesquelles:

- la figure 1 illustre schématiquement un interféromètre de l'Art Connu selon une première approche;
- la figure 2 illustre schématiquement un interféromètre de l'Art Connu selon une seconde approche;

- la figure 3 illustre un interféromètre selon une première approche de l'invention;
- la figure 4 illustre une variante de réalisation d'un interféromètre selon la première approche;
- la figure 5 illustre un interféromètre selon une seconde approche de l'invention.

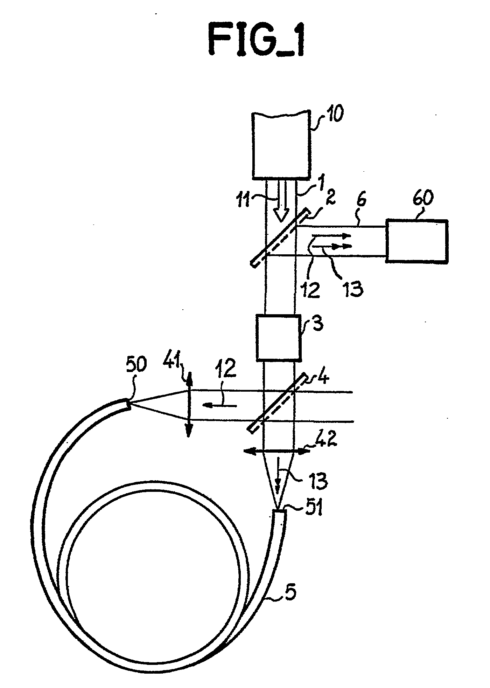

La figure 1 illustre schématiquement un interféromètre en anneau de l'Art connu selon une première approche.

Sur cette figure 1 est représenté un interféromètre en anneau dont l'anneau est réalisé en fibre optique monomode 5, mais dont le coeur est constitué d'élément optiques traditionnels. L'addition d'un filtre de mode 3 rend un tel interféromètre strictement réciproque.

Le faisceau incident 11 produit par une source laser traverse un filtre de mode 3 et se sépare en deux sur une lame semi-transparente 4. Une partie 12 du faisceau est envoyée dans la fibre optique par l'intermédiaire d'une lentille 41 qui le focalise sur l'entrée 50 de la fibre optique 5, tandis que l'autre partie 13 du faisceau est envoyée sur cette même fibre optique 5 par l'intermédiaire d'une lentille 42 qui le focalise sur l'entrée 51 de cette fibre optique 5. Les deux faisceaux parcourent la fibre en sens inverse et sont repris dans le bras de l'interféromètre par la lame semi-transparente 4. Ils retraversent le filtre de mode 3 et sont séparés du faisceau incident par une lame semi-transparente 2 qui les envoie en partie dans un bras de sortie 6 dans lequel on détecte le signal d'interférence, à l'aide d'un photodétecteur 60.

L'utilisation d'une fibre optique monomode 5 comme chemin optique permet d'augmenter très fortement la longueur de ce chemin optique. En effet, la fibre optique est habituellement enroulée pour former une bobine multispire. On réalise ainsi, par exemple, des gyroscopes très sensibles.

Cependant, les éléments séparateurs introduisent des pertes, comme il a été rappelé.

Ainsi, il a été proposé de remplacer les éléments discrets par des éléments optiques intégrés ce qui permet d'améliorer le bilan énergétique (FR-B 2 409 518).

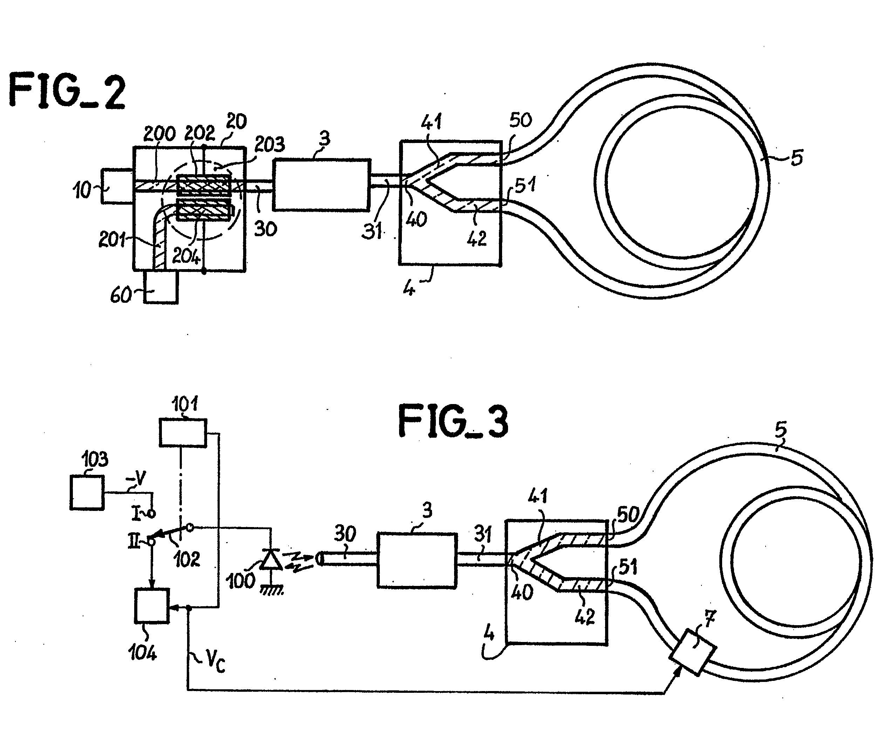

La figure 2 illustre schématiquement un dispositif de ce type.

Le dispositif comporte une source laser 10, préférentiellement un laser à semiconducteur. Il comporte également une plaquette 20 constituée par un substrat électrooptique sur lequel des guides d'onde 200 et 201 peuvent être réalisés. Les liaisons optiques intégrées sur le substrat sont donc un premier guide 200 captant le rayonnement émis par le laser 10, un second guide 201 formant, avec le premier guide 200, un coupleur 203. Un dispositif de détection 60 est couplé à l'extrémité du guide 201. Le coupleur 203 formé des deux parties adjacentes des guides 200 et 201 peut être placé, soit dans un état parallèle, la lumière guidée dans le guide 200 émergeant par le même guide, soit dans un état croisé, la lumière guidée dans le guide 200 étant couplée dans le guide 201. Pour cela, deux électrodes 202 et 204, entre lesquelles peut être appliqué un champ électrique, recouvrent les chemins optiques parallèles formés par les deux parties adjacentes des guides 200 et 201. En l'absence de champ, le coupleur est dans l'état parallèle et en présence de champ, le coupleur est dans l'état croisé. Le champ est appliqué pendant le retour de la lumière.

Le dispositif comprend également une deuxième plaquette 4 constitué par un substrat électrooptique sur lequel a été intégrée une bifurcation symétrique formée de deux guides 42 et 41 couplés à un guide d'entrée 40 et destinés à capter respectivement une moitié de rayonnement guidé par le guide 40. Les deux extrémités 50 et 51 de la fibre optique monomode 5 formant l'anneau de l'interféromètre sont couplées directement, sans optiques intermédiaires, aux extrémités des guides 41 et 42.

L'une des extrémités du guide 200, sur la plaquette 20, est couplée à une extrémité d'une fibre optique monomode intermédiaire 30 dont l'autre extrémité est couplée à son tour à un filtre de mode 3.

De la même manière l'une des extrémités du guide 40 est couplée à une seconde fibre optique monomode intermédiaire 31 dont l'autre extrémité est couplée à son tour au filtre de mode 3. Ce filtre de mode 3 peut être à son tour constitué par un guide d'onde optique intégré.

Naturellement, d'autres modes de couplage peuvent être adoptés entre le filtre de mode 3 et le guide 40, d'une part, et le guide 200, d'autre part.

Les éléments principaux d'un dispositif selon cette approche sont décrits dans le brevet français FR-B 2 409 518.

Le dispositif fonctionne alors de la manière suivante: La source laser 10 est modulée de manière à émettre des impulsions lumineuses de durée inférieure au temps de propagation dans la fibre. Le coupleur est dans l'état parallèle pendant l'émission des impulsions lumineuses de sorte que la lumière émise par le laser soit guidée dans le guide 200; l'énergie est séparée entre les deux guides 42 et 41, de manière égale et est transmise à la fibre 5 où elle se propage simultanément dans les deux sens. Si le système est en rotation à une vitesse angulaire $\omega$ les deux impulsions de retour seront transmises respectivement aux guides 42 et 41 avec un décalage de phase $\Delta \Phi$. Le coupleur est alors placé dans l'état croisé par application d'un champ électrique et la lumière transmise par le guide 200 est transmise au guide 201 et détectée par le détecteur 60.

Bien que constituant un dispositif amélioré en ce qui concerne le bilan énergétique, ce dispositif n'est pas optimisé, il est notamment possible de simplifier l'architecture de de dispositif.

La figure 3 illustre un dispositif selon une première approche de l'invention.

Dans le dispositif illustré par la figure 3, on retrouve l'anneau constitué par une fibre optique monomode 5. Le répartiteur de lumière 4 en optique intégrée à deux branches, les fibres optiques monomodes intermédiaires 30 et 31 ainsi que le filtre de mode 3. Les éléments identiques à ceux de la figure 2 portent les mêmes références et ne seront pas redécrits.

Selon la caractéristique principale de la première approche de l'invention, la source de lumière 100 est une diode semiconductrice pouvant servir alternativement d'émetteur et de récepteur de lumière, selon la polarité de l'alimentation électrique de cette diode.

Un certain nombre de composants semiconducteurs présente cette possibilité, notamment des diodes semiconductrices de type "GaAlAs/GaAs" (Gallium-Aluminium-Arsenic/Gallium-Arsenic), "GaAlAs" (Gallium-aluminium-Arsenic) ou "GaIn-AsP/InP" (Gallium-Indium-Arsenic-Phosphore/Indium-Phosphore). Plus particulièrement, dans ce dernier cas, il s'agit préférentiellement de diodes laser de structure connue sous l'abréviation anglo-saxonne "TJS" ("Transverse Junction Stripe" ou jonction transversale ruban).

A titre d'exemple parmi d'autres, un tel composant est décrit dans le brevet français FR-B 2 387 519.

En position émettrice, la diode 100 est polarisée en sens direct. Pour ce faire, un commutateur 102 à deux positions I et II, la relie à une source d'énergie électrique 103 (position I). Dans l'exemple illustré sur la figure 3, la cathode de la diode 100 est reliée à une tension négative −V (sens direct), d'amplitude suffisante pour émettre l'énergie lumineuse nécessaire à l'application particulière. La durée d'émission doit dépendre de la longueur du chemin optique parcouru par la lumière, c'est-à-dire en premier lieu de la longueur de la fibre optique 5. Comme il a été rappelé, cette longueur est en général comprise dans la gamme 200 m à 2 km. La lumière émise est donc retransmise à la source 100 après un intervalle de temps compris dans la gamme 1 à 10 microsecondes, pour les longueurs de fibre optique susmentionnées.

Le commutateur 102 est actionné par un circuit de commande 101 de manière à établir une liaison électrique (position II) entre la diode 100 et un circuit de traitement de signal 104, circuit comprenant les organes habituels à ce type d'application, notamment un amplificateur de signaux électriques.

Dans la réalité, le commutateur 102 est un organe électronique dont la vitesse de commutation est compatible avec l'application et non un commutateur électromagnétique comme représenté schématiquement sur la figure 3.

Le laser 100 utilisé comme détecteur a une bande passante très large mais un problème subsiste concernant le temps de relaxation des électrons excités quand le composant passe du mode émission au mode détection. Le système doit donc être modulé en créneau avec une période égale au double du temps de transit de la lumière dans l'interféromètre en anneau.

La détection du signal lié au déphasage dans un interféromètre en anneau se fait généralement avec une méthode de modulation de phase. Dans ce cas, la fréquence détectée est égale à $1/2\,\tau$ où $\tau$ est le temps de propagation dans la bobine.

Pour ce faire, les circuits de traitement de signaux comprennent un détecteur synchrone de type quadratique. Un signal Vc à la fréquence $1/2\,\tau$, élaboré par les circuits de commande 101 est transmis au détecteur synchrone compris dans les circuits de traitement de signaux 104.

En outre, au moins un modulateur de phase 7 à effet réciproque est introduit dans l'anneau 5 modulateur, qui reçoit également les signaux de commande Vc à la fréquence $1/2\,\tau$.

De telles dispositions sont décrites dans la demande de brevet franais FR-A 2 471 583.

Le modulateur de phase 7 met en jeu un effet réciproque: élastooptique ou électrooptique par exemple. Des exemples de tels modulateurs sont décrits dans la demande de brevet précitée. Ce modulateur est excité de façon à introduire une variation de phase de l'onde qui le traverse qui soit périodique, la période devant être égale à une valeur $2\,\tau$.

Du fait de la périodicité la relation suivante est vérifiée:

$$\Phi\,(t) = \Phi\,(t + 2\tau) \quad (1)$$

$\Phi\,(t)$ étant la fonction décrivant la variation de la phase en fonction du temps.

Chacune des deux ondes circulant en sens inverses subit également ce déphasage lorsqu'elle traverse le modulateur. Il s'en suit que la différence de phase, $\Delta\,\Phi$ en l'absence de ce déphaseur, devient:

$$\Delta\,\Phi' = \Delta\,\Phi + \Phi\,(t) - \Phi\,(t + \tau) \quad (2)$$

Si on appelle $\Psi\,(\tau)$ la fonction suivante:

$$\Psi\,(t) = \Psi\,(\tau) - \Psi\,(t + \tau) \quad (3)$$

du fait de la périodicité de $\Phi,(\tau)$, la fonction $\Psi\,(\tau)$ est symétrique, ce qui signifie que:

$$\Psi\,(t) = -\,\Psi\,(t + \tau) \quad (4)$$

Il en résulte que la puissance optique détectée dans chaque branche présente un spectre de fréquences représentant les composantes de la puissance optique détectée en fonction de la fréquence.

Ce spectre se décompose en:
— une composante continue,
— une composante de fréquence $1/2\,\tau$ proportionnelle à sin $(\Delta\,\Phi)$ ou composante utile,
— une composante de fréquence $1/\tau$ proportionnelle à Cos $(\Delta\,\Phi)$
— différentes composantes à des harmoniques d'ordres supérieures, harmonique dépendant de la forme exacte de la fonction $\Phi\,(\tau)$.

Cette dernière fonction, représentant la modulation de phase des ondes circulant en sens inverses dans l'anneau 5, peut être quelconque quant à sa forme. Toutefois, des fonctions telles que celles représentant des signaux carrés ou sinusoïdaux par exemple peuvent présenter certains avantages. Ces avantages peuvent être de plusieurs ordres: facilité de génération de ces fonctions, décomposition en harmoniques selon un spectre connu ou facilité de se synchroniser sur ces signaux.

On peut également disposer, dans une variante non illustrée, deux modulateurs de phase, à effet réciproque, un à chaque extrémité de l'anneau 5 de l'interféromètre. Chaque modulateur introduit un déphasage périodique comme précédemment, à la fréquence $1/2\,\tau$, mais de telle sorte que l'on ait la relation:

$$\Phi_1\,(t) = -\,\Phi_2\,(t) \quad (5)$$

$\Phi_1\,(t)$ étant le déphasage apporté par le premier modulateur et $\Phi_2\,(t)$ le déphasage apporté par le second modulateur. Si la relation (5) est substantiellement vérifiée quel que soit t, on obtient par cette disposition particulière un gain supplémentaire en stabilité dû à la symétrie.

La fréquence de modulation utilisée pour la commutation de la source dans le mode détecteur est 1/2 $\tau'$ où $\tau'$ est le temps de propagation de la lumière sur l'ensemble du trajet optique, c'est-à-dire: parcours dans l'anneau 5 et parcours aller-retour entre la source 100 et le séparateur 4 de l'interféromètre. Si le temps de parcours dans l'anneau 5 est beaucoup plus long que ce parcours aller-retour, ces deux fréquences sont très proches et peuvent produire un battement parasite dans la bande de détection. La solution idéale est d'avoir la fréquence de commutation égale au double de la fréquence de détection. Ceci est possible si le temps de parcours total est égal à une fois et demie le temps de parcours dans la bobine. Ceci implique d'utiliser une ligne à retard entre la source et le séparateur. Pour ce faire, on peut utiliser une fibre optique supplémentaire apportant un retard de propagation. La longueur de fibre optique nécessaire est égale au quart de la longueur de la fibre optique 5 formant l'anneau.

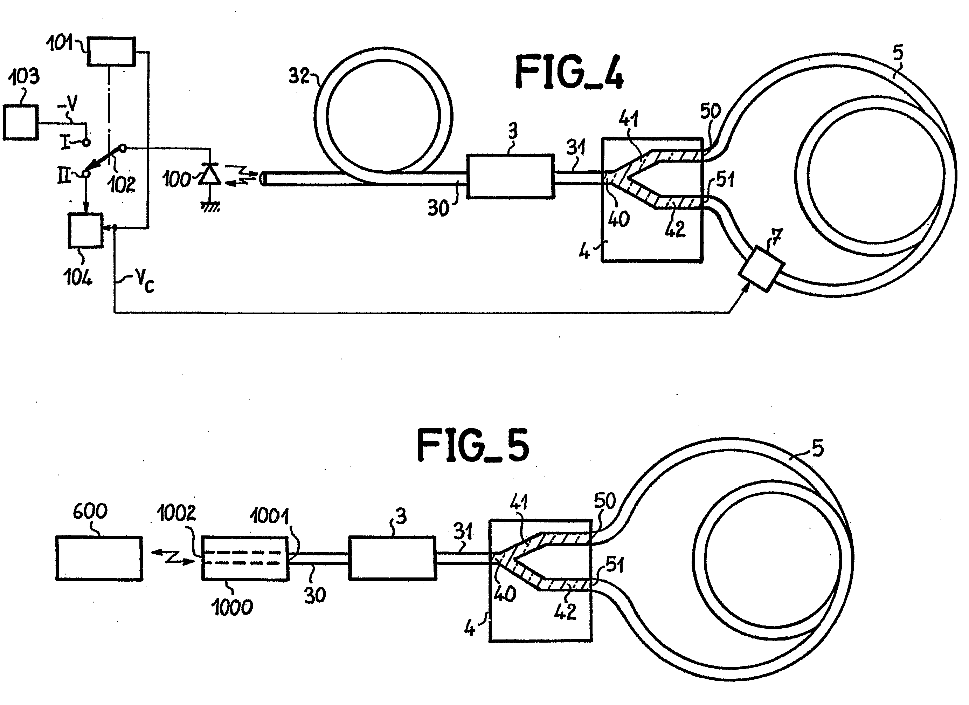

La figure 4 illustre cette variante. Outre les éléments communs à la figure 3, et qui ne seront pas redécrits, le dispositif illustré par cette figure comprend une fibre optique 32 formant ligne à retard en lieu et place de la fibre optique 30. Toutes autres dispositions peuvent également être adoptées: la fibre optique 32 peut être substituée à la fibre optique 31.

Selon une seconde approche de l'invention, la source de lumière est également couplée optiquement au filtre de mode 3 sans autre intermédiaire qu'éventuellement une fibre optique comme précédemment. Cette source est utilisée comme générateur de lumière et comme amplificateur de lumière. La figure 5 illustre cette seconde approche. La source 1000 est une diode laser semiconductrice de préférence de type "GaAs" (Gallium-Arsenic) ou une diode dite "superluminescente". La face avant 1001 de cette diode ou face normale d'émission est couplée optiquement, dans l'exemple illustré, à une fibre optique intermédiaire 30. Sa face arrière 1002 est couplée à un élément photodétecteur classique 600, une diode de type "PIN" par exemple.

La lumière retransmise à la source passe au travers de la diode laser 1000, est amplifiée pendant ce passage et est détectée de façon usuelle par la photodiode 600.

Dans les deux approches, le commutateur rapide (figure 2: 20) ou le séparateur (figure 1: 2) sont supprimés.

**Revendications**

1. Dispositif interféromètre en anneau comprenant une fibre optique monomode (5) formant ledit anneau, des moyens d'émission-réception d'énergie lumineuse cohérente, des moyens de séparation et de mélange (4) du rayonnement pour diriger simultanément et par parties égales, l'énergie lumineuse cohérente émise vers les deux extrémités de la fibre optique monomode (5) pour recombiner le rayonnement émergeant des deux extrémités (50, 51) de la fibre optique monomode (5) et un filtre de mode (3) disposé entre les moyens de séparation et de mélange (4) et les moyens d'émission-réception d'énergie lumineuse, caractérisé en ce que les moyens d'émission-réception d'énergie lumineuse sont constitués par une diode semiconductrice (100) qui, polarisée dans le sens direct, émet de la lumière d'une longueur d'onde déterminée et qui, polarisée en sens inverse, est détectrice de lumière de même longueur d'onde; et en ce qu'il comprend des moyens de polarisation (103) de ladite diode (100) en sens direct pour en commander l'émission de lumière, des moyens de traitement de signaux électriques (104), des moyens de commutation (102) et des moyens de commande (101) de ces moyens de commutation (102), de manière à établir alternativement une liaison électrique entre la diode semiconductrice (100) et, respectivement, les moyens de polarisation en sens direct (103) et les moyens de traitement de signaux électriques (104).

2. Dispositif selon la revendication 1, caractérisé en ce qu'il comprend au moins un modulateur de phase (7) à effet réciproque commandé par un signal périodique (Vc) de fréquence 1/2 $\tau$, $\tau$ étant le temps que met une onde pour parcourir le chemin optique défini par l'anneau (5) et en ce que lesdits circuits de traitement de signaux électriques (104) comprennent un détecteur synchrone à la même fréquence.

3. Dispositif selon la revendication 2, caractérisé en ce qu'il comprend en outre une fibre optique monomode supplémentaire (32) disposée entre la diode semiconductrice (100) et lesdits moyens de séparation et de mélange (4) de longueur égale au quart de la longueur de la fibre optique monomode (5) formant l'anneau, cette fibre optique (32) formant une ligne à retard.

4. Dispositif selon la revendication 1, caractérisé en ce que la diode semiconductrice (100) est du type: "Gallium-Aluminium-Arsenic/Gallium-Arsenic".

5. Dispositif selon la revendication 1, caractérisé en ce que la diode semiconductrice (100) est du type: "Gallium-Indium-Arsenic-Phosphore/Indium-Phosphore".

6. Dispositif selon la revendication 1, caractérisé en ce que la diode semiconductrice (100) est du type: "Gallium-Aluminium-Arsenic" présentant une structure de type "jonction transversale ruban".

7. Dispositif interféromètre en anneau comprenant une fibre optique monomode (5) formant ledit anneau, des moyens d'émission-réception d'énergie lumineuse cohérente, des moyens de séparation et de mélange (4) du rayonnement pour diriger simultanément et par parties égales l'énergie lumineuse cohérente émise vers les deux extrémités de la fibre optique monomode (5) et pour recombiner le rayonnement émergeant des deux extrémités (50, 51) de la fibre optique monomode (5) et un filtre de mode (3) disposé entre les moyens de séparation et de mélange (4) et les moyens d'émission-réception d'énergie lumineuse, caractérisé en ce que les moyens d'émission-réception d'énergie lumineuse comprennent une diode semiconductrice (1000) émettrice de lumière cohérente couplée optiquement par une première face (1001) au filtre de mode (3) et des moyens optoélectroniques de détection (600) couplés optiquement à une seconde face (1002) de la diode semiconductrice (1000) émettrice de lumière, cette diode amplifiant la lumière retransmise aux moyens d'émission-réception, avant détection.

8. Dispositif selon la revendication 7, caractérisé en ce que les moyens optoélectronique de détection sont constitués par une diode (600) de type "PIN".

9. Dispositif selon la revendication 7, caractérisé en ce que ladite diode semiconductrice (1000) est une diode laser du type "Gallium-Arsenic".

10. Dispositif selon la revendication 7, caractérisé en ce que ladite diode semiconductrice (1000) est une diode superluminescente.

## Patentansprüche

1. Ringförmige interferometrische Anordnung mit einer den Ring bildenden optischen Monomodefaser (5); Sende- und Empfangsmitteln für kohärente Lichtenergie; Mitteln zur Trennung und Mischung (4) der Strahlung, um die Lichtenergie gleichzeitig und zu gleichen Teilen auf die beiden Enden der optischen Monomodefaser (5) zu richten und die aus den beiden Enden (50, 51) der optischen Monomodefaser (5) austretende Strahlung zu rekombinieren; und einem Modus-Filter (3) zwischen den Trenn- und Mischmitteln (4) und den Sende-Empfangsmitteln für Lichtenergie, dadurch gekennzeichnet, daß die Sende-Empfangsmittel für Lichtenergie aus einer Halbleiter-Diode (100) bestehen, die in Vorwärtsrichtung vorgespannt Licht einer bestimmten Wellenlänge aussendet und in der Rückwärtsrichtung vorgespannt als Empfänger von Licht der gleichen Wellenlänge arbeitet; und daß sie Mittel zur Vorspanung (103) der Diode (100) in Vorwärtsrichtung zur Auslösung der Lichtemission, Mittel zur Verarbeitung der elektrischen Signale (104), Mittel zur Umschaltung (102) und Mittel zur Steuerung (101) dieser Umschaltmittel (102) zur alternativen Herstellung einer elektrischen Verbindung zwischen der Halbleiterdiode (100), und den Mitteln zur Vorspannung in Vorwärtsrichtung (103) bzw. den Mitteln zur Verarbeitung der elektrischen Signale (104) aufweist.

2. Anordnung nach Anspruch 1, dadurch gekennzeichnet, daß sie mindestens einen Phasenmodulator (7) mit Reziprokeffekt aufweist, der von einem periodischen Signal ($V_c$) mit der Frequenz $1/2\tau$ gesteuert wird, wobei $\tau$ die Zeit ist, die eine Welle zum Durchlaufen des durch den Ring (5) definierten optischen Weges benötigt, und daß die Verarbeitungskreise (104) der elektrischen Signale einen synchronen, mit der gleichen Frequenz arbeitenden Detektor aufweisen.

3. Anordnung nach Anspruch 2, dadurch gekennzeichnet, daß sie weiter eine zusätzliche optische Monomodefaser (32) zwischen der Halbleiterdiode (100) und den Trenn- und Mischmitteln aufweist, deren Länge einem Viertel der Länge der den Ring bildenden optischen Monomodefaser (5) entspricht, wobei diese optische Faser (32) eine Verzögerungsleitung bildet.

4. Anordnung nach Anspruch 1, dadurch gekennzeichnet, daß die Halbleiterdiode (100) vom Typ Gallium-Aluminium-Arsen/Gallium-Arsen ist.

5. Anordnung nach Anspruch 1, dadurch gekennzeichnet, daß die Halbleiterdiode (100) vom Typ Gallium-Indium-Arsen-Phosphor/Indium-Phosphor ist.

6. Anordnung nach Anspruch 1, dadurch gekennzeichnet, daß die Halbleiterdiode (100) vom Typ Gallium-Aluminium-Arsen ist und eine Struktur vom Typ transversaler Übergangsstreifen (in englisch Transverse Junction Stripe) besitzt.

7. Ringförmige interferometrische Anordnung mit einer den Ring bildenden optischen Monomodefaser (5); Sende- und Empfangsmitteln für kohärente Lichtenergie; Mitteln zur Trennung und Mischng (4) der Strahlung, um die Lichtenergie gleichzeitig und zu gleichen Teilen auf die beiden Enden der optischen Monomodefaser (5) zu richten und um die aus den beiden Enden (50, 51) der optischen Monomodefaser (5) austretende Strahlung zu rekombinieren; und einem Modus-filter (3) zwischen den Trenn- und Mischmitteln (4) und den Sende-Empfangsmitteln für Lichtenergie, dadurch gekennzeichnet, daß die Sende-Empfangsmittel eine kohärentes Licht aussendende Halbleiterdiode (1000), die mit einer ersten Fläche (1001) optisch an das Modus-filter (3) angekoppelt ist, und optoelektronische Erfassungsmittel (600) aufweisen, die an eine zweite Fläche (1002) der Licht aussendenden Halbleiterdiode (1000) angekoppelt sind, wobei diese Diode das an die Sende- und Empfangsmittel zurückgesandte Licht vor der Erfassung verstärkt.

8. Anordnung nach Anspruch 7, dadurch gekennzeichnet, daß die optoelektronischen Erfassungsmittel aus einer Diode (600) vom PIN-Typ bestehen.

9. Anordnung nach Anspruch 7, dadurch gekennzeichnet, daß die Halbleiterdiode (1000) eine Laserdiode vom Typ Gallium-Arsen ist.

10. Anordnung nach Anspruch 7, dadurch gekennzeichnet, daß die Halbleiterdiode (1000) eine Superlumineszenzdiode ist.

## Claims

1. An annular interferometric device comprising an optical monomode fibre (5) constituting the ring, emission-reception means for coherent light energy, means for separating and mixing (4) the radiation adapted to direct simultaneously and at equal shares the emitted coherent light energy towards the two ends of the optical monomode fibre (5) in order to recombine the radiation emerging from the two ends (50, 51) of the optical monomode fibre (5), and a mode filter (3) disposed between the separating and mixing means (4) and the emission-reception means of the light energy, characterized in that the light energy emission-reception means is constituted by a semiconductor diode (100) which, when biassed in the forward sense, emits light having a predetermined wave length and which, when biassed in the reversed sense, detects light having this same wave length; and that it comprises means (103) for biassing said diode (100) in the forward sense in order to control the emission of light, means for processing the electric signals (104), switching means (102) and control means (101) for actuating these switching means (102) in order to establish alternatively an electric connection between the semiconductor diode (100) and, respectively, the means for biassing in the forward sense (1032) and the means for processing electric signals (104).

2. A device according to claim 1, characterized in that it comprises at least one phase modulator (7) presenting a reciprocal effect and being controlled by a periodical signal ($V_c$) having a frequency of value $1/2\tau$, wherein $\tau$ is the time needed by a wave to travel through the optical way defined by the ring (5), and that said circuits for processing electric signals (104) comprise a synchroneous detector operating at the same frequency.

3. A device according to claim 2, characterized in that it further comprises a supplementary optical monomode fibre (32) disposed between the semiconductor diode (100) and said separation and mixing means (4) and having a length equal to a quarter of the length of the optical monomode fibre (5) forming the ring, this optical fibre (32) constituting a delay line.

4. A device according to claim 1, characterized in that the semiconductor diode (100) is of the gallium-aluminium-arsenic/gallium-arsenic type.

5. A device according to claim 1, caracterized in that the semiconductor diode (100) is of the gallium-indium-arsenic-phosphorus/indium-phosphorus type.

6. A device according to claim 1, characterized in that the semiconductor diode (100) is of the gallium-aluminium-arsenic type presenting a structure of the "transverse junction stripe" type.

7. An annular interferometric device comprising an optical monomode fibre (5) constituting the ring, emission-reception means for coherent light energy, means for separating and mixing (4) the radiation adapted to direct simultaneously at equal shares the emitted coherent light energy towads the two ends of the optical monomode fibre (5) in order to recombine the radiation emerging from the two ends (50, 51) of the optical monomode fibre (5), and a mode filter (3) disposed between the separating and mixing means (4) and the emission-reception means for light energy, characterized in that the light energy emission-reception means comprise a semiconductor diode (1000) emitting coherent light and being optically coupled via a first face (1001) to the mode filter (3), optoelectronic detection means (600) optically coupled via a second face (1002) of the light emitting semiconductor diode (1000), said diode being adapted to amplify the light retransmitted to the emission-reception means prior to detection.

8. A device according to claim 7, characterized in that the optoelectronic detection means are constituted by a PIN-type diode (600).

9. A device according to claim 7, characterized in that said semiconductor diode (1000) is a laser diode of the gallium-arsenic type.

10. A device according to claim 7, characterized in that said semiconductor diode (1000) is a superluminescent diode.

# FIG_1

# FIG_2

# FIG_3

EP 0 206 866 B1

FIG_4

FIG_5

EP 0 206 866 B1